# EUROPÄISCHE PATENTSCHRIFT

(11) **EP 0 854 308 B1**
(45) Veröffentlichungstag und Bekanntmachung des Hinweises auf die Patenterteilung: **17.07.2002**
(21) Anmeldenummer: 97122874.7
(22) Anmeldetag: 24.12.1997
(51) Int. Cl.: F16K 5/06

(54) **Kugelhahn**
Ball valve
Robinet à tournant sphérique

(30) Priorität: 18.01.1997 DE 19701652
(43) Veröffentlichungstag der Anmeldung: 22.07.1998
(73) Patentinhaber: Argus Gesellschaft mbH, 76275 Ettlingen (DE)
(72) Erfinder: Maier, Manfred, 75045 Walzbachtal (DE)
(74) Vertreter: Geitz, Heinrich, Dr.-Ing.

(56) Entgegenhaltungen:
- GB-A- 2 213 564
- US-A- 3 235 226
- US-A- 3 504 885
- US-A- 4 273 309

## Beschreibung

Die Erfindung betrifft einen insbesondere für Rohrleitungen zum Schleusen rieselförmiger Feststoffe, wie Flugasche, Sand, Zement oder dergleichen, bestimmten Kugelhahn nach dem Oberbegriff von Anspruch 1.

Kugelhähne dieser Art und Zweckbestimmung sind bekannt. Bei derartigen Kugelhähnen besteht das Gehäuse in der Regel aus wenigstens zwei einander zu einer zumindest angenäherten Kugelform ergänzenden Gehäuseteilen und innerhalb des Gehäuses ist zwischen ringförmigen Dichtungen eine Absperrkugel aufgenommen. Durch die Gehäuseteile erstrecken sich miteinander fluchtende Durchströmwege hindurch und die Absperrkugel ist mit einer Durchgangsbohrung versehen sowie um eine in der Regel rechtwinklig zur Durchgangsbohrung verlaufende Drehachse mittels einer Schaltwelle zwischen einer die Durchströmwege der Gehäuseteile miteinander verbindenden Öffnungsstellung und einer diese Druchströmwege voneinander trennenden Schließlage betätigbar. Wenigstens eine der die Absperrkugel zwischen sich aufnehmenden Dichtungen ist in dem einen Gehäuseteil begrenzt axialbeweglich gelagert und mittels einer Tellerfeder bzw. eines Tellerfederpaketes an die Absperrkugel angedrückt. Die Tellerfeder bzw. das Tellerfederpaket stützt sich an einer den ringförmigen Aufnahmeraum für die Dichtung auf der von der Absperrkugel abgewandten Seite abschließenden Ringschulter des betreffenden Gehäuseteils ab. Bei den eingesetzten Dichtungen kann es sich, je nach Zweckbestimmung des Kugelhahns, um Weichdichtungen oder metallische Dichtungen handeln.

Kugelhähne dieser Art haben sich zum Schleusen sowohl flüssiger Medien als auch rieselförmiger Feststoffe bewährt. Beim Schleusen rieselförmiger Feststoffe kann es jedoch vorkommen, daß sich nach und nach zwischen der die eine Dichtung an die Absperrkugel andrückenden Tellerfeder bzw. einem Tellerfederpaket und der Ringschulter Feststoffe ansammeln. Nach einer gewissen Zeit führt dies zu einer zunehmenden Schwergängigkeit bei der Betätigung des Kugelhahns bis hin zur vollständigen Blockierung der Absperrkugel.

Die Ursache für derartige Schwergängigkeiten bis hin zur Blockierung liegt darin begründet, daß derjenige Bereich der mittels Federkraft beaufschlagten Dichtung, der beim Schaltvorgang nicht an die Absperrkugel angepreßt wird, sondern sich im Bereich der Durchgangsbohrung der Absperrkugel befindet, in Richtung der Kugel verkippt mit der Folge, daß sich zwischen der Tellerfeder bzw. dem Tellerfederpaket und der abstützenden Ringschulter ein Spalt bildet, in den Feststoffpartikel eindringen, die dann ein Rückfedern der Federmittel beeinträchtigen bis hin zur Blockierung der Absperrkugel.

Aus der US-A-4,273,309 ist ein Kugelhahn mit den Merkmalen des Oberbegriffs des Anspruchs 1 bekannt geworden. Dort wird ein ringförmiges Dichtelement durch eine scheibenförmige Sitzfeder an die Absperrkugel angedrückt, wobei sich die Sitzfeder einerseits im Bereich ihres Innendurchmessers an dem Dichtelement und andererseits im Bereich Ihres Außendurchmessers an einer Anschlagschulter des Gehäuseteils unter Vorspannung abstützt. Dadurch ist zwischen der dieses Dichtelement aufnehmenden Sitztasche des Gehäuses und der Sitzfeder ein Ringspalt ausgebildet, der notwendig ist, um das federnde Andrücken der Sitzfeder beim Schalten des Kugelhahns zu. ermöglichen. In diesen Ringspalt können infolge der Federbewegung beim Schalten des Kugelhahns Festkörper eindringen, die zu einer Blockade der Absperrkugel führen können.

Die Aufgabe der vorliegenden Erfindung besteht daher darin, einen Kugelhahn der eingangs genannten Art, der insbesondere für den Einsatz in Leitungssystemen zum Schleusen rieselförmiger Feststoffe bestimmt ist, so auszubilden, daß derartige Schwergängigkeiten beim Schalten oder gar Blokkierung der Absperrkugel nicht auftreten können.

Gelöst ist diese Aufgabe dadurch, daß bei dem Kugelhahn nach dem Oberbegriff des Patentanspruchs 1 sich durch die Auskammerung in Umfangsrichtung voneinander beabstandete sowie die Tellerfeder abstützende Vorsprünge axial hindurcherstrecken. Anstelle einer Tellerfeder kann selbstverständlich auch ein Tellerfederpaket zum Andrücken der Dichtung an die Absperrkugel eingesetzt werden.

Angesichts einer derartigen Auskammerung auf der von der Absperrkugel abgewandten Seite und der Verbindung dieser Auskammerung mit dem sich durch den Gehäuseteil, in dem die mittels der Tellerfeder angedrückte Dichtung aufgenommen ist, hindurcherstreckenden Strömungsweg können zwischen der Tellerfeder und deren Abstützung am Gehäuse keine bleibenden Festkörperansammlungen auftreten. Vielmehr werden infolge der Federbewegungen beim Schalten des Kugelhahns Festkörperansammlungen in den Durchströmweg des die betreffende Dichtung aufnehmenden Gehäuseteils verdrängt.

Durch die Zwischenräume zwischen den genannten Vorsprüngen hindurch werden etwaige Feststoffansammlungen aus den Auskammerungen in den Strömungsweg zurückgeführt.

Als besonders vorteilhaft hat sich gemäß einer anderen Weiterbildung der Erfindung eine Kugelhahngestaltung erwiesen, bei der die Vorsprünge zur axialen Abstützung der die bewegbare Dichtung an die Absperrkugel andrückenden Tellerfeder sich angrenzend an den Durchströmweg des Gehäuseteils erstrecken und die Tellerfeder nur in einem radial innenseitigen Randbereich axial abstützen. Dies hat zur Folge, daß die radial äußeren Bereiche der Tellerfeder ungehindert im Rahmen ihrer Federeigenschaften Federwege auszuführen vermögen.

Eine abermalige Weiterbildung sieht vor, daß die Auskammerung als Ausdrehung ausgebildet ist und zur axialen Abstützung der Tellerfeder ein sich seinerseits an einer Ringschulter abstützender Stützring dient, der die in Umfangsrichtung voneinander beabstandeten Vorsprünge aufweist, die zur Tellerfeder hin vorstehen und diese abstützen.

Bei dieser Weiterbildung handelt es sich somit darum, daß beabstandet von der Tellerfeder im Bereich des von der Absperrkugel entfernten Endes der Auskammerung eine ringförmige Ausnehmung mit einer Ringschulter eingestochen und in dieser Ausnehmung der Abstützring aufgenommen ist, der mit seinen in Umfangsrichtung voneinander beabstandeten Vorsprüngen dann die Tellerfeder partiell in einem radial innenseitigen Randbereich abstützt. Die Auskammerung steht wiederum über die Zwischenräume zwischen den Vorsprüngen des Abstützringes mit dem Durchströmweg durch den die mittels der Tellerfeder an die Absperrkugel angedrückte Dichtung aufnehmenden Gehäuseteil in Verbindung.

Bei einer anderen wichtigen Ausgestaltung der Erfindung können die in Umfangsrichtung voneinander beabstandeten Vorsprünge zur axialen Abstützung der Tellerfeder in deren radial innerem Bereich auch einstückig mit dem Gehäuseteil, der die mittels der Tellerfeder an die Absperrkugel angedrückte Dichtung aufnimmt, ausgebildet sowie radial außenseitig von der Auskammerung umgeben sein. Auch bei dieser Ausführungsform steht die Auskammerung über die Zwischenräume zwischen den die Tellerfeder abstützenden Vorsprüngen mit dem sich durch den betreffenden Gehäuseteil hindurcherstreckenden Durchströmweg in Verbindung.

Insbesondere kann es sich bei der Auskammerung nach der vorstehend erläuterten Ausgestaltung um eine die der Abstützung der Tellerfeder dienenden Vorsprünge hinterschneidende Ausdrehung handeln und bei den Zwischenräumen zwischen den Vorsprüngen um im wesentlichen radial gerichtete Ausfräsungen. Die Erfindungsaufgabe kann aber auch in der Weise gelöst sein, daß es sich bei den in Umgangsrichtung voneinander beabstandeten sowie die Tellerfeder axial abstützenden Vorsprüngen um im Bereich einer Schulter des Hahngehäuses vorstehende Stifte handelt, an denen sich die Tellerfeder in einem radial innenseitigen Bereich punktuell abstützt.

Anhand der beigefügten Zeichnung sollen nachstehend zwei Ausführungsformen der Erfindung näher erläutert werden. In schematischen Ansichten zeigen:
- Fig. 1: einen Längsschnitt durch einen Kugelhahn mit einer erfindungsgemäßen Abdichtung zwischen dem Gehäuse und der Absperrkugel,
- Fig. 2: in einer etwa der Schnittlinie II-II in Fig. 1 entsprechenden Ausschnittansicht einen mit einer herkömmlichen Dichtung ausgerüsteten Kugelhahn, dessen Absperrkugel in einer Teilöffnungslage steht,
- Fig. 3: in einem Ausschnitt aus Fig. 1 eine mittels eines sich an einem Stützring abstützenden Tellerfederpaketes an eine Absperrkugel andrückbare Dichtung,
- Fig. 4: in einer Ansicht wie in Fig. 3 eins andere Ausführungsform der an die Absperrkugel mittels Federkraft andrückbaren Dichtung mit einstückig mit dem Kugelhahngehäuse ausgebildeten und der Abstützung eines Tellerfederpaketes dienenden Vorsprüngen und
- Fig. 5: eine der Schnittlinie V-V in Fig. 1 entsprechende hälftige Ansicht des Kugelhahngehäuses mit gegemäß Fig. 4 einstückig mit diesem ausgebildeten Vorsprüngen zum Abstützen eines Tellerfederpaketes zum Andrücken der Dichtung an die Absperrkugel.

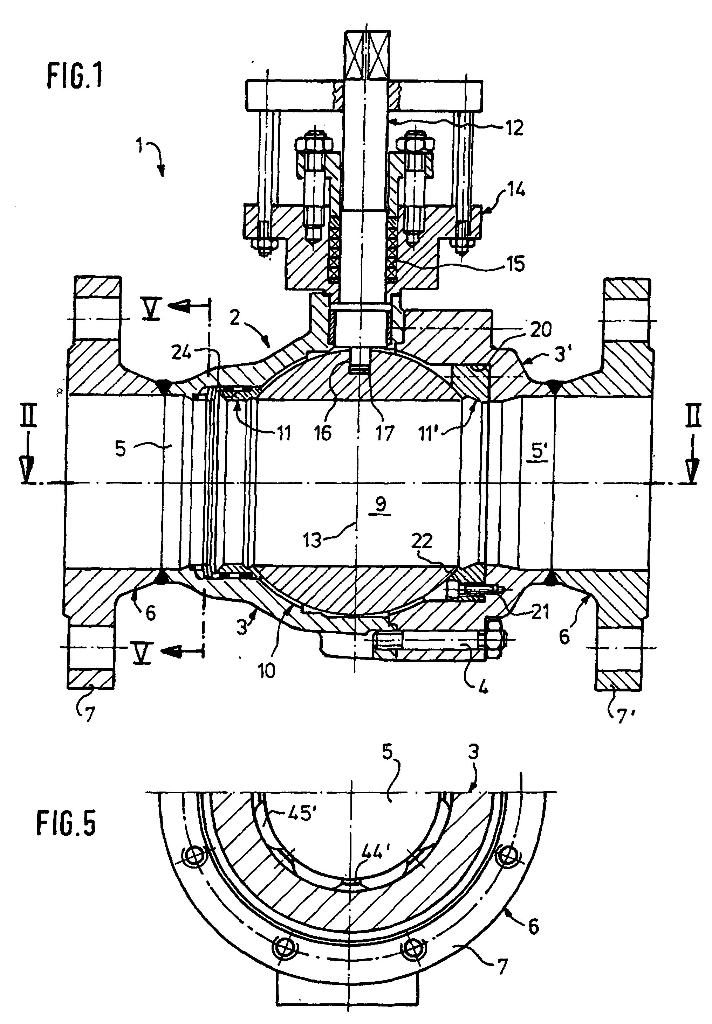

Der in Fig. 1 in einer Längsschnittansicht dargestellte Kugelhahn 1 besitzt ein Gehäuse 2, das aus zwei einander zu einer angenäherten Kugelform ergänzenden Gehäuseteilen 3, 3' besteht, die mittels Schrauben 4 in hier im einzelnen nicht interessierender Weise miteinander verbunden sind. Jedes Gehäuseteil 3, 3' weist einen Durchströmweg 5, 5' auf, die miteinander fluchten. An den voneinander abgewandten Seiten des Gehäuses 2 sind an die Gehäuseteile 3, 3' Rohrabschnitte 6, 6' mit dem Einbau des Kugelhahns 1 in eine nichtdargestellte Rohrleitung vermittelnden Anschlußflanschen 7, 7' angeschweißt.

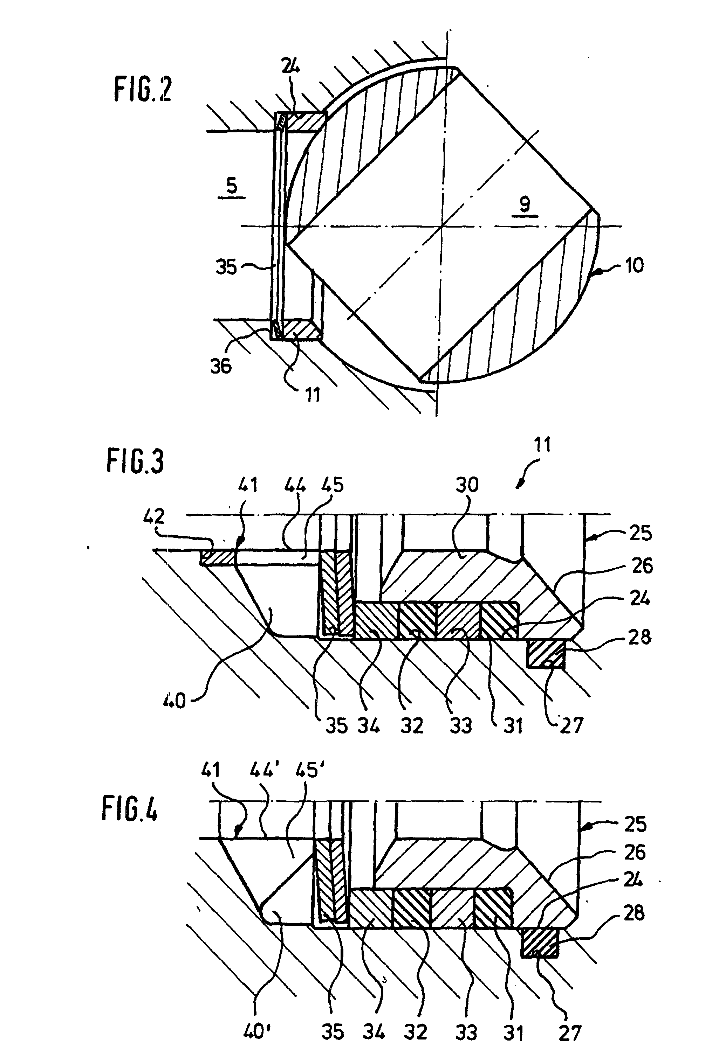

Innerhalb des Gehäuses 2 ist als Absperrorgan eine mit einer Durchgangsbohrung 9 versehene Absperrkugel 10 zwischen in den Gehäuseteilen 3, 3' aufgenommenen Dichtungen 11, 11' angeordnet. Mittels einer Schaltwelle 12 ist die Absperrkugel 10 um eine Drehachse 13 zwischen der in Fig. 1 gezeigten Öffnungslage, in der die Durchgangsbohrung 9 mit den Durchströmwegen 5, 5' der Gehäuseteile 3, 3' fluchtet, und einer gegenüber der Öffnungslage um 90° verschwenkten Schließlage schaltbar, in der die Durchströmwege 5, 5' voneinander getrennt sind. Die Drehachse 13 verläuft rechtwinklig zur Durchgangsbohrung 9. Fig. 2 zeigt in schematischer Darstellung eine Zwischenposition der Absperrkugel 10 beim Schalten eines derartigen Kugelhahns von der Offenstellung in die Schließlage bzw. umgekehrt, in der die Längsachse der Durchgangsbohrung 9 in einem Winkel von etwa 45° gegenüber den Durchströmwegen 5, 5' der Gehäuseteile 3, 3' steht.

Die Schaltwelle 12 ist in bekannter Weise in einem Gehäuseaufsatz 14 drehbar gelagert und mittels einer Stopfbuchsenanordnung 15 gegenüber dem die Absperrkugel 10 aufnehmenden Gehäuseinnenraum abgedichtet. Die Schaltwelle 12 ist über eine Feder 16, die in eine nutartige Ausnehmung 17 der Absperrkugel formschlüssig eingreift, mit letzterer drehfest verbunden. Die Schaltbetätigung des Kugelhahns 1 zwischen seiner Offenstellung und Schließlage bzw. umgekehrt erfolgt mittels eines nicht dargestellten Stellmotors, der mit der Schaltwelle 12 drehfest gekuppelt ist, oder mittels eines ebenfalls nicht dargestellten Handrades, das an dem von der Absperrkugel 10 entfernten Ende auf der Schaltwelle 12 aufgenommen und mit dieser über einen Zapfen drehfest verbunden ist.

Die Dichtung 11' des Gehäuseteils 3 ist in einer gegenüber dem sich durch diesen Gehäuseteil hindurcherstreckenden Durchströmweg 5' radial erweiterten Ringkammer 20 axialfest aufgenommen und mittels einer angedeuteten Verschraubung 21 festgelegt. Es handelt sich bei der Dichtung 21 um eine bekannte metallische Dichtung mit einer an der Absperrkugel 10 anliegenden Dichtfläche 22, die der sphärischen Kugelform angepaßt ist.

Die dem Gehäuseteil 3 zugeordnete Dichtung 11 ist ebenfalls in einer gegenüber dem sich durch diesen Gehäuseteil hindurcherstreckenden Durchströmweg 5 radial erweiterten Ringkammer 24 aufgenommen, jedoch im Gegensatz zu der Dichtung 11' begrenzt axialbeweglich. Die Dichtung 11 besitzt, wie die Fig. 3 und 4 zeigen, einen metallischen Dichtkörper 25 mit einer an der Absperrkugel 10 anliegenden Dichtfläche 26, die ebenfalls der sphärischen Kugelform angepaßt ist.

In einer in den Gehäuseteil 3 im Bereich der Ringkammer 24 eingestochenen Ringnut 27 ist eine den Dichtkörper 25 in der Nähe der Dichtfläche 26 konzentrisch umschließende Ringdichtung 28 aus elastischem Material aufgenommen. Beabstandet von der Dichtfläche 26 weist der Dichtkörper 25 einen gegenüber der Ringkammer 24 im Querschnitt reduzierten Abschnitt 30 auf und zwischen diesem Abschnitt und der Ringkammer 24 sind axialbeabstandet voneinander zwei Ringdichtungen 31, 32 aus elastischem Material und der Zwischenlage eines metallischen Druckringes 33 und auf der von der Absperrkugel 10 abgewandten Seite ein über den Dichtkörper 25 axial vorstehender Druckring 34 angeordnet. An dem vorstehenden Druckring 34 greift ein aus zwei Tellerfedern bestehendes Tellerfederpaket 35 an, das sich radial innenseitig in unten noch zu beschreibender Weise an dem Gehäuseteil 3 axial abstützt und den Dichtkörper 25 mit seiner Dichtfläche 26 an die Absperrkugel 10 andrückt.

Bei der in Fig. 2 in schematischer Darstellung gezeigten Ausführungsform, die dem Stande der Technik entspricht, stützt sich das die Dichtung 11 an die Absperrkugel 10 andrückende, nur angedeutete Tellerfederpaket 35 an einer die Ringkammer 24, in der Dichtung 11 axialbeweglich aufgenommen ist, auf der von der Absperrkugel 10 abgewandten Seite begrenzenden Ringschulter 36 radialinnenseitig ab.
Es ist ersichtlich, daß beim Schleusen eines Mediums dieses sich zwischen der Ringschulter 36 und der sich divergierende dazu forterstreckende Tellerfeder 35 ansammeln kann. Soweit es sich bei diesem Medium um rieselfähige Feststoffe, wie etwa Flugasche, Kohlenstaub oder dergleichen handelt, können Festkörperansammlungen zwischen der Tellerfeder 35 und der diese radialinnenseitig abstützenden Ringschulter 36 den Federweg der Tellerfeder beeinträchtigen bis hin zu deren Blockierung.

Derartige Festköperansammlungen können insbesonders dann auftreten, wenn beim Schaltvorgang die Dichtung 11 nur teilweise an der sphärischen Oberfläche der Absperrkugel 10 anliegt, während andere Teile der Dichtung 11 sich im Bereich der sich durch die Absperrkugel 10 hindurcherstreckenden Durchgangsbohrung 9 befinden mit der Folge, daß angesichts der Federkraftbeaufschlagung der Dichtung 11 auf der von der Absperrkugel 10 abgewandten Seite die Dichtung in Richtung der Absperrkugel 10 vorkippt und dabei der radialaußenseitige Bereich zwischen der Tellerfeder 35 und der Ringschulter 36 eine Verfüllung erfährt. Angesichts einer derartigen Verfüllung vermag beim fortschreitenden Schaltvorgang die Tellerfeder 35 nicht hinreichend zurückzufedern, so daß es zumindest zu einer unerwünschten Schwergängigkeit beim Schalten des Kugelhahns 1 bis hin zur Blockierung der Absperrkugel 10 kommen kann.

Dieser Problematik hilft die Erfindung bekanntlich dadurch ab, daß sich auf der von der Absperrkugel 10 abgewandten Seite der Tellerfeder bzw. eines Tellerfederpaketes 35 an die Ringkammer 24, in der die Dichtung 11 aufgenommen ist, eine Auskammerung 40, 40' anschließt, die mit dem Durchströmweg 5 des betreffenden Gehäuseteils 3 verbunden ist, und daß die Tellerfeder bzw. ein Tellerfederpaket 35 sich mit einem radialinnenseitigen Randbereich nur partiell an Vorsprüngen abstützt, die in Umfangsrichtung voneinander beabstandet sind, wobei die Zwischenräume zwischen den die Tellerfeder radial innenseitig abstützenden Vorsprüngen die Verbindung der Auskammerung mit dem Durchströmweg des betreffenden Gehäuseteils vermitteln.

Bei der in Fig. 3 veranschaulichten Ausführungsform besteht die Auskammerung aus einer sich an die Ringkammer 24, in welcher der Dichtkörper 25 der Dichtung 11 axialbeweglich aufgenommen ist, anschließenden Ausdrehung 40 und als Mittel zum Abstützen des Tellerfederpaketes 35 dient ein Stützring 41, der sich an einer von dem Tellerfederpaket abgewandten Ringschulter 42 des Gehäuseteils 3 abstützt und durch die Ausdrehung 40 vorstehende Vorsprünge 44 aufweist, die in Umfangsrichtung unter Ausbildung von Zwischenräumen 45 voneinander beabstandet sind und an denen der Randbereich des Tellerfederpaketes 35 partiell anliegt.

Es ist ersichtlich, daß Festkörperansammlungen in der die Auskammerung bildenden Ausdrehung 40 beim Rückfedern des Tellerfederpaketes 35 problemlos durch die Zwischenräume zwischen den axialvorstehenden Vorsprüngen 44 des Stützrings 41 hindurch in den Durchströmweg 5 zurückdrängbar sind, so daß eine Beeinträchtigung der Federeigenschaften des Tellerfederpaketes 35 vermieden ist und demgemäß Blokkierungen der Absperrkugel 10 bzw. Schwergängigkeiten des Kugelhahns 1 beim Schalten nicht auftreten können.

Bei der Ausführungsform nach Fig. 4 besteht die Auskammerung ebenfalls aus einer sich an die Ringkammer 24, in welcher der metallische Dichtkörper 25 axialbeweglich aufgenommen ist, anschließenden Hinterdrehung 40', die jedoch nicht bis zum Durchströmweg 5 des Gehäuseteils reicht, sondern als Hinterdrehung eines radialinnnenseitigen Abschnittes 41' des Gehäuseteils 3 ausgebildet ist, der in Richtung des Tellerfederpaketes 35 vorsteht und dieses in einem radialinnenseitigen Randbereich abstützt. Dieser vorstehende Abschnitt 41' ist mit im wesentlichen radialgerichteten, Zwischenräume 45' bildenden Ausfräsungen versehen, so daß benachbart von diesen Ausfräsungen in Umfangsrichtung voneinander beabstandete Vorsprünge 44' vorstehen, die einstückig mit dem den Dichtungskörper 25 aufnehmenden Gehäuseteil 3 ausgebildet sind und im radial inneren Randbereich das Tellerfederpaket 35 partiell abstützen.

Auch bei dieser Ausführungsform können die Federeigenschaften des Tellerfederpaketes 35 durch Festkörperansammlungen im Bereich der Auskammerung 40' nicht beeinträchtigt werden, weil beim Rückfedern des Tellerfederpaketes 35 derartige Ansammlungen durch die Zwischenräume 45' zwischen den in Umfangsrichtung voneinander beabstandeten Vorsprüngen 44' hindurch aus der Auskammerung in den Durchströmweg 5 des Gehäuseteils 3 verdrängt werden.

## Patentansprüche

1. Insbesondere für Rohrleitungen zum Schleusen rieselförmiger Feststoffe, wie Flugasche, Sand, Zement oder dergleichen, bestimmter Kugelhahn mit einem Gehäuse (2), das aus wenigstens zwei, jeweils einen Durchströmweg (5, 5') aufweisenden Gehäuseteilen (3, 3') besteht, und mit einer eine Durchgangsbohrung (9) als Strömungsweg zum wahlweisen Verbinden der Durchströmwege (5, 5') der Gehäuseteile (3, 3') aufweisenden Absperrkugel (10), die innerhalb des Gehäuses (2) zwischen ringförmigen Dichtungen (11, 11'), von denen zumindest eine Dichtung (11) durch wenigstens eine an dem eine Dichtung aufnehmenden Gehäuseteil (3) abgestützte Tellerfeder (35) an die Absperrkugel (10) angedrückt wird, aufgenommen und mittels einer Schaltwelle (12) zwischen einer den Strömungsweg freigebenden Öffnungslage und absperrenden Schließlage schaltbar ist, wobei sich auf der von der Absperrkugel (10) abgewandten Seite der Tellerfeder (35) an den Aufnahmeraum (24) der von der Tellerfeder (35) an die Absperrkugel (10) angedrückten Dichtung (11) eine Auskammerung (40, 40') anschließt, die zumindest abschnittsweise mit dem Durchströmweg (5) durch das diese Dichtung (11) aufnehmende Gehäuseteil (3) in Verbindung steht,
**dadurch gekennzeichnet,**
**daß** sich durch die Auskammerüng (40, 40') in Umfangsrichtung voneinander beabstandete sowie die Tellerfeder (35) abstützende Vorsprünge (44, 44') axial hindurcherstrecken.

2. Kugelhahn nach Anspruch 1, **dadurch gekennzeichnet, daß** die Vorsprünge (44, 44') zur axialen Abstützung der Tellerfeder (35) sich angrenzend an den Durchströmweg (5) des Gehäuseteils (3) erstrecken und die Tellerfeder (35) nur in einem radial innenseitigen Randbereich axial abstützen.

3. Kugelhahn nach Anspruch 1 oder 2, **dadurch gekennzeichnet, daß** die Auskammerung (40) als Ausdrehung ausgebildet ist und zur axialen Abstützung der Tellerfeder (35) ein sich seinerseits an einer Ringschulter (42) des die Auskammerung (40) aufweisenden Gehäuseteils (3) abstützender Stützring (41) dient, der die in Umfangsrichtung voneinander beabstandeten und zur Tellerfeder (35) hin vorstehenden Vorsprünge (44) aufweist.

4. Kugelhahn nach Anspruch 1 oder 2, **dadurch gekennzeichnet**, da die in Umfangsrichtung voneinander beabstandeten Vorsprünge (44') zur axialen Abstützung der Tellerfeder (35) an deren radial inneren Randbereich einstükkig mit dem Gehäuseteil (3), der die mittels der Tellerfeder (35) an die Absperrkugel (10) angedrückte Dichtung (11) aufnimmt, ausgebildet sowie radial außenseitig von.der Auskammerung (40') umgeben sind.

5. Kugelhahn nach Anspruch 4, **dadurch gekennzeichnet, daß** es sich bei der Auskammerung (40') um eine Hinterdrehung der die Dichtung (11) axial abstützenden Vorsprünge (44') handelt.

6. Kugelhahn nach Anspruch 5, **dadurch gekennzeichnet, daß** es sich bei den die Auskammerung (40') mit dem Durchströmweg (5) des die Dichtung (11) aufnehmenden Gehäuseteils (3) verbindenden Zwischenräumen (45') zwischen den die Tellerfeder (35) abstützenden Vorsprüngen (44') um Ausfräsungen handelt.

7. Kugelhahn nach Anspruch 1, **dadurch gekennzeichnet, daß** es sich bei den Vorsprüngen zur axialen Abstützung der Tellerfeder (35) um von einer Schulter des Gehäuseteils (3) in Umfangsrichtung beabstandet voneinander axial vorstehende Stifte handelt, an denen sich ein radial innenseitiger Bereich der Tellerfeder (35) punktuell abstützt.

## Claims

1. Ball valve intended particularly for pipe ducts for the flow control of flowable solids, such as flue ash, sand, cement or the like, with a housing (2) which consists of at least two housing parts (3, 3') each having a respective throughflow path (5, 5'), and with a blocking ball (10), which has a passage bore (9) as a flow path for selectable connection of the throughflow paths (5, 5') of the housing parts (3, 3') and which is received within the housing (2) between annular seals (11, 11'), of which at least one seal (11) is pressed against the blocking ball (10) by at least one plate spring (35) supported at the housing part (3) receiving the one seal, and is switchable by means of a switch shaft (12) between an open position freeing the flow path and a closed position blocking the flow path, wherein a chamber (40, 40') adjoins the receiving space (24) of the seal (11), which is pressed against the blocking ball (10) by the plate spring (35), on the side of the plate spring (35) remote from the blocking ball (10) and stands in connection at least sectionally with the throughflow path (5) through the housing part (3) receiving this seal (11), **characterised in that** projections (44, 44') spaced from one another in circumferential direction and supporting the plate spring (35) extend axially through the chamber (40, 40').

2. Ball valve according to claim 1, **characterised in that** the projections (44, 44') for axial support of the plate spring (35) extend contiguously with the throughflow path (5) of the housing part (3) and axially support the plate spring (35) only at an edge region at the radially inner side.

3. Ball valve according to claim 1 or 2, **characterised in that** the chamber (40) is formed as a turned-out hollow, and serving for axial support of the plate spring (35) is a support ring (41) which is in turn supported at an annular shoulder (42) of the housing part (3) having the chamber (40) and which has the projections (44), which are spaced from one another in circumferential direction and project towards the plate spring (35).

4. Ball valve according to claim 1 or 2, **characterised in that** the projections (44'), which are spaced from one another in circumferential direction, for axial support of the plate spring (35) at the radially inner edge region thereof are formed integrally with the housing part (3), which receives the seal (11) pressed against the blocking ball (10) by means of the plate spring (35), and are radially surrounded at the outer side by the chamber (40').

5. Ball valve according to claim 4, **characterised in that** the chamber (40') is a relieving of the projections (44') axially supporting the seal (11).

6. Ball valve according to claim 5, **characterised in that** the intermediate spaces (45'), which connect the chamber (40') with the throughflow path (5) of the housing part (3) receiving the seal (11), between the projections (44') supporting the plate spring (35) consist of millings-out.

7. Ball valve according to claim 1, **characterised in that** the projections for axial support of the plate spring (35) are pins which project axially from a shoulder of the housing part (3) at a mutual spacing in circumferential direction and at which a region of the plate spring (35) at the radially inner side is supported at points.

## Revendications

1. Robinet à obturateur sphérique destiné en particulier à des conduites tubulaires pour commander le passage de matières solides capables d'écoulement comme les cendres volantes, le sable, le ciment ou analogues, comprenant un corps (2) qui est composé d'au moins deux parties de corps (3, 3') présentant chacune une voie d'écoulement (5, 5'), et une sphère obturatrice (10) présentant un perçage traversant (9) en tant que voie d'écoulement pour relier sélectivement les voies d'écoulement (5, 5') des parties de corps (3, 3'), qui est logée à l'intérieur du corps (2), entre des garnitures d'étanchéité annulaires (11, 11'), dont au moins une garniture d'étanchéité (11) est pressée contre la sphère obturatrice (10) par au moins une rondelle Belleville (35) qui prend appui contre la partie de corps (3) qui reçoit une garniture d'étanchéité, et qu'on peut manoeuvrer au moyen d'un arbre de manoeuvre (12) entre une position d'ouverture qui libère la voie d'écoulement et une position de fermeture qui l'obture, cependant que, sur le côté de la rondelle Belleville (35) qui est éloigné de la sphère obturatrice (10), se raccorde à l'espace de logement (24) de la garniture d'étanchéité (11) pressée contre la sphère obturatrice (10) par la rondelle Belleville (35), un chambrage (40, 40') qui est en communication, au moins par segments, avec la voie d'écoulement (5) traversant la partie de corps (3) qui reçoit cette garniture d'étanchéité (11),
**caractérisé en ce que** des protubérances (44, 44') qui sont espacées les unes des autres dans la direction circonférentielle, et qui donnent appui à la rondelle Belleville (35) s'étendent axialement à travers le chambrage (40, 40').

2. Robinet à obturateur sphérique selon la revendication 1, **caractérisé en ce que** les protubérances (44, 44') destinées à l'appui axial de la rondelle Belleville (35) s'étendent en position adjacente à la voie de passage (5) de la partie de corps (3) et ne donnent appui axial à la rondelle Belleville (35) que dans une région du côté marginal radialement intérieur.

3. Robinet à obturateur sphérique selon la revendication 1 ou 2, **caractérisé en ce que** le chambrage (40) est réalisé sous la forme d'un évidement tourné et, pour donner appui axial à la rondelle Belleville (35), il est prévu une bague d'appui (41) qui, de son côté, prend appui contre un épaulement annulaire (42) de la partie de corps (3) qui présente le chambrage (40), bague qui présente les protubérances (44) espacées les unes des autres dans la direction circonférentielle et qui font saillie en direction de la rondelle Belleville (35).

4. Robinet à obturateur sphérique selon la revendication 1 ou 2, **caractérisé en ce que** les protubérances (44') espacées les unes des autres dans la direction circonférentielle, qui sont destinées à donner appui axial à la rondelle Belleville (35), sont réalisées, le long de la région marginale radialement intérieure de celle-ci, en une seule pièce avec la partie de corps (3) qui reçoit la garniture d'étanchéité (11) qui est pressée contre la sphère obturatrice (10) au moyen de la rondelle Belleville (35), et sont aussi entourées sur le côté radialement extérieur par le chambrage (40').

5. Robinet à obturateur sphérique selon la revendication 4, **caractérisé en ce que** le chambrage (40') est constitué par un contre-alésage des protubérances (44') qui donnent appui axial à la garniture d'étanchéité (11).

6. Robinet à obturateur sphérique selon la revendication 5, **caractérisé en ce que** les espaces intermédiaires (45') entre les protubérances (44') qui donnent appui à la rondelle Belleville (35), qui mettent le chambrage (40') en communication avec la voie d'écoulement (5) de la partie de corps (3) qui reçoit la garniture d'étanchéité (11) sont constitués par des fraisages.

7. Robinet à obturateur sphérique selon la revendication 1, **caractérisé en ce que** les protubérances qui donnent appui axial à la rondelle Belleville (35) sont constituées par des tiges qui font saillie axialement sur un épaulement de la partie de corps (3) et sont espacées les unes des autres dans la direction circonférentielle, et contre lesquelles s'appuie ponctuellement une région radialement intérieure de la rondelle Belleville (35).
